(19) Europäisches Patentamt
European Patent Office
Office européen des brevets

(11) Veröffentlichungsnummer : **0 006 432**
**B1**

(12) **EUROPÄISCHE PATENTSCHRIFT**

(45) Veröffentlichungstag der Patentschrift : **15.08.84**

(51) Int. Cl.³ : **C 08 G 77/18**, C 08 G 77/50, C 08 G 77/38

(21) Anmeldenummer : **79101416.0**

(22) Anmeldetag : **09.05.79**

(54) **Verfahren zur Herstellung von hitzehärtbaren Siliconharzen.**

(30) Priorität : **01.07.78 DE 2828990**

(43) Veröffentlichungstag der Anmeldung : **09.01.80 Patentblatt 80/01**

(45) Bekanntmachung des Hinweises auf die Patenterteilung : **15.08.84 Patentblatt 84/33**

(84) Benannte Vertragsstaaten : **BE FR GB NL**

(56) Entgegenhaltungen :
**BE-A- 537 654**
**DE-A- 2 512 590**
**DE-A- 2 512 632**
**FR-A- 2 265 799**
**US-A- 3 133 111**
**Die Akte enthält technische Angaben, die nach dem Eingang der Anmeldung eingereicht wurden und die nicht in dieser Patentschrift enthalten sind.**

(73) Patentinhaber : **Th. Goldschmidt AG**
**Goldschmidtstrasse 100 Postfach 101461**
**D-4300 Essen 1 (DE)**

(72) Erfinder : **Koerner, Götz, Dr.**
**Kantorie 126**
**D-4300 Essen (DE)**
Erfinder : **Kropac, Vaclav**
**Bedingrader Strasse 92**
**D-4300 Essen (DE)**

**EP 0 006 432 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von hitzehärtbaren Siliconharzen durch Umsetzung von Alkoxypolysiloxanen der allgemeinen Formel

$$\begin{array}{l} R^2_a\text{-}Si(OR^1)_b \\ \quad\ | \\ \quad\ O_{\frac{4-(a+b)}{2}} \end{array}$$

($OR^1$ = Alkoxygruppe, abgeleitet von primären oder sekundären aliphatischen Alkoholen mit 1 bis 4 Kohlenstoffatomen, $R^2$ = Alkyl- und/oder Phenylgruppe, a = 1,0 bis 1, 5, b = 0,1 bis 0,7) mit polyfunktionellen organischen Hydroxylverbindungen bei Temperaturen von 100-160 °C > 100 °C, gegebenenfalls in Gegenwart bekannter Lösungsmittel, im Molverhältnis COH : $SiOR^1$ von etwa eins, wobei die Reaktion bei einem Umsetzungsgrad von 25 bis 80 % durch Abkühlen auf eine Temperatur > 100 °C abgebrochen wird.

Aus der DE-A-20 20 224 sind Methyl- bzw. Methylphenylpolysiloxanharze mit einem Verhältnis von organischen Gruppen R : Si von 0,95 bis 1,5, wobei die restlichen Si-Valenzen durch Sauerstoff und Alkoxygruppen abgesättigt sind und letztere in Mengen bis zu 0,75 Mol Alkoxy pro 100 g Harz anwesend sein können, wobei R Methyl- und/oder Phenylreste bedeutet und bis zu 20 Molprozent der Methyl- und/oder Phenylreste durch Vinylreste ersetzt sein können, bekannt, welche dadurch gekennzeichnet sind, daß sie durch Umsetzung eines Halogensilangemisches mit einem R : Si-Gruppen-Verhältnis von 0,95 bis 1,5 mit einer Mischung, bestehend aus

a) tertiären kettenförmigen aliphatischen Alkoholen mit 4 bis 8 Kohlenstoffatomen und

b) primären und/oder sekundären kettenförmigen aliphatischen Alkoholen mit 1 bis 8 Kohlenstoffatomen,

wobei je Mol siliciumgebundenem Halogen 0,4 bis 0,6 Mol tertiärer Alkohol und je Mol tertiärer Alkohol 0,5 bis 1 Mol primärer und/oder sekundärer Alkohol eingesetzt werden, bei 10 bis 90 °C und gegebenenfalls in an sich bekannter Weise erfolgende Nachkondensation des erhaltenen Reaktionsproduktes hergestellt sind. Diese Methyl- bzw. Methylphenylpolysiloxanharze sind den Siliconharzen überlegen, welche man nach den früher üblichen Verfahren dadurch herstellte, daß man Gemische von mono-, di- und trifunktionellen Silanen in einer überschüssigen Menge Wasser hydrolysierte. Die entsprechend der DE-A-20 20 224 hergestellten Harze ergeben harte und elastische Lackfilme mit ausgezeichneter Wärmebeständigkeit.

Ein verfahrenstechnischer Nachteil, welcher die Herstellung dieser Harze betrifft, besteht darin, daß man die Harzvorprodukte vor der Verwendung einer Nachkondensation mit $FeCl_3$ unterzog und das Eisenchlorid nach der Nachkondensation mit Wasser auswaschen mußte. Dies bedeutete einen zusätzlichen Verfahrensschritt, der außerdem das Abwasser mit sauren Abfallstoffen, Lösungsmitteln und Eisensalzen belastete. Ein weiterer Nachteil dieser Polysiloxanharze besteht in einer mitunter zu geringen Pigmentverträglichkeit. Bei manchen technischen Anwendungen wird außerdem eine Thermostabilität und Elastizität der Lackfilme gefordert, die mit diesen Polysiloxanharzen nicht in allen Fällen erreichbar ist.

Aus der DE-A-21 07 471 ist es bekannt, die entsprechend der Lehre der DE-A-20 20 224 zunächst entstehenden Harzvorprodukte mit organischen Harzvorprodukten umzusetzen, wobei im Harzvorprodukt enthaltene SiOR-Gruppen mit COH-Gruppen der organischen Harzvorprodukte reagieren.

Als organische COH-Gruppen aufweisende Harzvorprodukte sind dabei Polyester genannt, wie sie durch Reaktion von Adipinsäure, Terephthalsäure, Isophthalsäure, Phthalsäure oder deren Ester (z. B. Methylester) bzw. Anhydride einerseits mit mehrwertigen Alkoholen, wie z. B. Äthylenglykol, Trimethylolpropan, Glycerin, Pentaerythrit andererseits hergestellt werden können. Brauchbar sind auch Acrylharze, Epoxidharze, Polycarbonate, Phenolharze, Melaminharze oder Harnstoffharze mit freien COH-Gruppen. Von besonderer Bedeutung sind Alkydharze, welche Ester mehrfach ungesättigter Carbonsäuren enthalten.

Diesem Stand der Technik entspricht auch die BE-A-537 654. Nach dem dort beschriebenen Verfahren setzt man ein Alkoxypolysiloxan mit einem Bis-(hydroxyalkoyl-) dicarboxylat bis zu einem Umsetzungsgrad von 50 bis 90 % um. Der organische, modifizierende Anteil in diesen Umsetzungsprodukten beträgt, wie sich auch aus den Beispielen entnehmen läßt, etwa 40 Gew.-%.

Diese siliciummodifizierten, organischen Harze sind den früher hergestellten Mischharzen des Standes der Technik hinsichtlich Wärmebeständigkeit, Wetterfestigkeit, Elastizität, Verformbarkeit, Vergilbungsresistenz, Glanzhaltung und Haftung auf dem Untergrund überlegen. Sie weisen jedoch bedingt durch ihren Aufbau zwangsläufig die Nachteile auf, die durch den Einbau organischer Harzvorprodukte bedingt sind.

Der vorliegenden Erfindung liegt nun die Aufgabe zugrunde, neuartige hitzehärtbare Siliconharze herzustellen, wobei einerseits das Herstellverfahren in einfacher Weise ablaufen soll und ein stabiles, der

Härtung zugängliches, lagerbeständiges Harzvorprodukt erhalten werden soll, welches eine erhöhte Härtungsgeschwindigkeit und gute Hydrolysebeständigkeit auch im unausgehärteten Zustand aufweisen und dessen Pigmentverträglichkeit verbessert sein soll. An die Eigenschaften der ausgehärteten Harzfilme werden dabei die Anforderungen verbesserter Thermostabilität und Elastizität und damit verbesserter Haftung auf metallischen Untergründen gestellt. Die ausgehärteten Harze sollen bei thermischer Belastung einen möglichst geringen Gewichtsverlust aufweisen.

Es wurde gefunden, daß diese und weitere vorteilhafte Eigenschaften dadurch erzielt werden können, daß man

a) als polyfunktionelle organische Hydroxylverbindungen Äthylenglykol, Trimethyloläthan, Trimethylolpropan, Neopentylglykol, Glycerin, Pentaerythrit, Dimethylolcyclohexan oder ein Gemisch hiervon

b) mit dem Alkoxypolysiloxan umsetzt und den Wert des Index b so wählt, daß das ausgehärtete Endprodukt $\leqq$ 20 Gew.-% der polyfunktionellen organischen Hydroxylverbindung enthält.

Entsprechend dem Mol-Gewicht und der Wertigkeit des verwendeten niedermolekularen mehrwertigen Alkohols soll der Wert des Index b so ausgewählt werden, daß im ausgehärteten Endprodukt nicht mehr als maximal 20 Gew.-% der niedermolekularen mehrwertigen Alkoholkomponente in gebundener Form enthalten sind.

Als $OR^1$-Gruppen kommen die Methoxy-, Äthoxy-, n- oder iso-Propoxy- sowie n- oder iso-Butoxygruppen in Frage. Besonders bevorzugt ist die Methoxygruppe.

Es hat sich gezeigt, daß sich besonders lagerstabile hitzehärtbare Siliconharze dann herstellen lassen, wenn das Ausgangssiloxan sowohl Methoxygruppen als auch höhere Alkoxygruppen aus der Reihe der n- oder iso-Propoxy- und n- oder iso-Butoxygruppen enthält. Das molare Verhältnis von Methoxy- zu höheren Alkoxygruppen soll dabei 2,5 bis 1 : 1 sein. Dabei wird die unterschiedliche Reaktivität der Alkoxygruppen mit den niedermolekularen mehrwertigen Alkoholen ausgenutzt.

$R^2$ bedeutet Alkyl- und/oder Phenylgruppen. Als Alkylgruppen sind insbesondere die niederen Alkylgruppen mit 1 bis 4 C-Atomen, besonders die Methylgruppe, bevorzugt. Es können jedoch auch höhere Alkylgruppen vorhanden sein, z. B. Alkylgruppen mit bis zu 18 Kohlenstoffatomen. Diese werden jedoch in der Regel nicht als alleinige $R^1$-Gruppen verwendet werden, sondern neben niederen Alkylgruppen, insbesondere Methylgruppen, vorliegen.

Besonders bevorzugt sind Siliconharze, bei denen $R^1$ sowohl die Bedeutung einer Methyl- wie auch einer Phenylgruppe hat. Dabei ist ein molares Verhältnis von Methyl- zu Phenylgruppen von 0,5 bis 1,5 : 1, vorzugsweise von 0,75 bis 1,25 besonders bevorzugt. Der Verzweigungsgrad des Siliconharzes wird seitens des Siloxans durch die Indices a und b bestimmt, a hat einen Wert von 1,0 bis 1,5, vorzugsweise einen Wert von 1,2 bis 1,4. b hat einen Wert von 0,1 bis 0,7, vorzugsweise einen Wert von 0,3 bis 0,6.

Der Verzweigungsgrad wird zusätzlich bestimmt durch die Struktur des niedermolekularen mehrwertigen Alkohols.

Innerhalb der siliciumorganischen Reaktionskomponente sind die Verbindungen bevorzugt, welche 10 bis 30 Mol-% Dimethylsiloxyeinheiten und 5 bis 10 Mol-% Trimethylsiloxyeinheiten haben. Insbesondere bevorzugt sind solche Verbindungen, welche außerdem noch 50 bis 80 Mol-% Monophenylsiloxyeinheiten aufweisen. Die Siloxane der allgemeinen Formel

$$R^2_a{-}\underset{\underset{O_{\frac{4-(a+b)}{2}}}{|}}{Si}(OR^1)_b$$

lassen sich beispielsweise durch folgende durchschnittliche Strukturformel wiedergeben

$$\left[C_6H_5\right]_{0,8}\left[(CH_3)_2\right]_{0,15}\left[(CH_3)_3\right]_{0,05}{-}\underset{\underset{O_{\frac{4-(1,25+b)}{2}}}{|}}{Si}{-}(OCH_3)_b$$

$$\left[C_6H_5\right]_{0,53}\left[CH_3\right]_{0,27}\left[(CH_3)_2\right]_{0,1}\left[(CH_3)_3\right]_{0,1}{-}\underset{\underset{O_{\frac{4-(1,3+b)}{2}}}{|}}{Si}{-}(OCH_3)_b$$

$$\left[C_6H_5\right]_{0,113}\left[CH_3\right]_{0,674}\left[(CH_3)_2\right]_{0,113}\left[(CH_3)_3\right]_{0,1}{-}\underset{\underset{O_{\frac{4-(1,31+b_1+b_2)}{2}}}{|}}{Si}\begin{matrix}(OCH_3)_{b_1}\\(OC_3H_7\text{-}i)_{b_2}\end{matrix}$$

wobei $b_1 + b_2 = b$ ist

$$\left[C_6H_5\right]_{0,32}\left[CH_3\right]_{0,53}\left[(CH_3)_2\right]_{0,05}\left[(CH_3)_3\right]_{0,1}\underset{\substack{|\\ O_{\frac{4-(1,25+b)}{2}}}}{-Si-}(OCH_3)_b$$

Die Umsetzung wird bei erhöhter Temperatur durchgeführt. Es haben sich dabei Temperaturen von 100 bis 160 °C als zur Durchführung der Reaktion besonders geeignet erwiesen. Die Reaktion kann durch an sich bekannte Umesterungskatalysatoren beschleunigt werden. Derartige Katalysatoren sind z. B. Titanester, wie Butyltitanat, sowie Kobaltsalze organischer Säuren, wie Kobaltoctoat. Geeignet sich ferner Sulfonsäuren, wie p-Toluolsulfonsäure oder Benzolsulfonsäure. Die Zugabe eines Katalysators ist jedoch nicht zwingend notwendig.

Die Reaktion kann in Gegenwart von Lösungsmitteln, wie z. B. aromatischen Lösungsmitteln, z. B. Xylol, Toluol, oder Estern, wie Äthylglykolacetat, oder Ketonen, wie Cyclohexanon, und deren Gemischen durchgeführt werden. Diese Lösungsmittel können im Verfahrensprodukt verbleiben bzw. bis zu einem gewünschten Restgehalt abdestilliert werden.

Wesentlich ist bei dem erfindungsgemäßen Verfahren, daß die Reaktion durch Abkühlen abgebrochen wird, wenn der Umsetzungsgrad 25 bis 80 %, vorzugsweise 40 bis 60 %, erreicht hat. Dieser Umsetzungsgrad läßt sich durch Bestimmung der freigesetzten Alkoholmenge $R^1OH$ bestimmen.

Man erhält nach dem erfindungsgemäßen Verfahren ein Siliconharzvorprodukt, welches bei seiner Anwendung, z. B. auf einem metallischen Untergrund, zu einem Film ausgehärtet werden kann.

Sowohl das Siliconharzvorprodukt wie das ausgehärtete Siliconharz erfüllen alle eingangs erwähnten Anforderungen.

Das Siliconharzvorprodukt ist praktisch unbegrenzt lagerfähig, ohne daß sich die Viskosität des Produktes oder seiner Lösung verändert. Das Siliconharzvorprodukt oder seine Lösung weist eine ausgezeichnete Pigmentverträglichkeit auf. Es hat eine hohe, gegenüber dem Stand der Technik verbesserte Härtungsgeschwindigkeit. Ein besonderer Vorteil des Siliconharzvorproduktes besteht darin, daß es aus seiner Lösung auch bei hohem Gehalt an siliciumgebundenen Phenylresten an der Luft bei Raumtemperatur zu einem nicht klebenden festen Film trocknet. In überraschender Weise zeigt bereits das unausgehärtete partiell umgesetzte Produkt eine hohe Hydrolysebeständigkeit. Dies war insbesondere im Hinblick auf W. Noll « Chemie und Technologie der Silicone », 1968, Seite 320, nicht zu erwarten. Dort ist ausführlich ausgeführt, daß allen Cokondensationsprodukten mit SiOC-Bindungen die Eigenschaft anhaftet, daß sie mehr oder weniger hydrolyseempfindlich sind. Dabei wird auf die besondere Hydrolyseanfälligkeit von Siloxanglykolcopolymeren ausdrücklich hingewiesen.

Die ausgehärteten Siliconharze zeigen eine ausgezeichnete Thermostabilität und Elastizität bei guter Haftung auf metallischem Untergrund. Der minimale Gewichtsverlust der ausgehärteten Harze bei thermischer Belastung ist insbesondere für die Verwendung der Siliconharze in der Elektroindustrie von Bedeutung.

In den folgenden Beispielen werden die Herstellung der hitzehärtbaren Siliconharze und die Eigenschaften der gehärteten Siliconharze noch näher gezeigt.

## Beispiel 1

1 000 g eines Alkoxypolysiloxans, das aus 80 Mol-% Phenyltrichlorsilan, 15 Mol-% Dimethyldichlorsilan und 5 Mol-% Trimethylchlorsilan nach einem hier nicht beanspruchten Hydrolyseverfahren in an sich bekannter Weise hergestellt worden war und 7,4 Gew.-% an Silicium gebundene Methoxygruppen aufweist, 63,9 g Trimethylolpropan, 14,8 g Äthylenglykol, 0,2 g Butyltitanat und 1 000 g Xylol werden in einer Destillationsapparatur vorgelegt und unter Rühren aufgeheizt. Bei 125 °C beginnt die Reaktion, das entstandene Methanol destilliert im Gemisch mit Xylol ab. Die Temperatur steigt weiter bis auf 140 °C. Die Reaktionszeit beträgt 1 h. Wenn die gewünschte Viskosität des Reaktionsgemisches erreicht ist, wird die Reaktion durch Abkühlen und Verdünnen mit Xylol auf 50 % Festkörper abgebrochen. Der Reaktionsumsatz, berechnet nach der Menge des abdestillierten Methanols, beträgt 38 %. Das Endprodukt weist eine Viskosität von 60 cSt ($mm^2/s$) bei 25 °C auf.

Ein 2 g Muster dieses Produktes wurde in einer Schale 2 h bei 200 °C eingebrannt und dann nach 1 000 h Alterung bei 200 °C ein Gewichtsverlust von 5,9 Gew.-% festgestellt.

## Beispiel 2

1 000 g eines Alkoxypolysiloxans, das aus 80 Mol-% Phenyltrichlorsilan, 15 Mol-% Dimethyldichlorsilan und 5 Mol-% Trimethylchlorsilan durch eine Hydrolyse hergestellt worden war und 14 Gew.-% an Silicium gebundene Methoxygruppen aufweist, 201 g Trimethylolpropan und 0,5 g Co-octoat werden in 1 000 g Xylol nach Beispiel 1 umgesetzt. Es wird ein Reaktionsumsatz von 55 % erreicht. Das mit Xylol auf 50 % Festkörper eingestellte Endprodukt weist eine Viskosität bei 25 °C von 320 cSt ($mm^2/s$) auf.

Beispiel 3

Nach Beispiel 1 werden 1 000 g eines Alkoxypolysiloxans, das aus 53 Mol-% Phenyltrichlorsilan, 27 Mol-% Methyltrichlorsilan, 10 Mol-% Dimethyldichlorsilan und 10 Mol-% Trimethylchlorsilan hergestellt worden war und 10,5 Gew.-% an Silicium gebundene Methoxygruppen enthält, mit 123,7 g Trimethylolpropan, 17,9 g Äthylenglykol und 0,4 g Butyltitanat in 1 000 g Xylol umgesetzt. Der Reaktionsumsatz beträgt 76 %. Das 50 %ige Endprodukt weist eine Viskosität bei 25 °C von 80 cSt ($mm^2/s$) auf. Dieses Siliconharz weist eine sehr gute Pigmentverträglichkeit auf und eignet sich besonders zur Herstellung von hitzebeständigen und elastischen Lacküberzügen.

Beispiel 4

Nach Beispiel 1 werden 1 000 g eines Alkoxypolysiloxans, das aus 32 Mol-% Phenyltrichlorsilan, 53 Mol-% Methyltrichlorsilan, 5 Mol-% Dimethyldichlorsilan und 10 Mol-% Trimethylchlorsilan hergestellt worden war und 9,7 Gew.-% an Silicium gebundene Methoxygruppen enthält, mit 111,8 g Trimethylolpropan in 1 000 g Xylol umgesetzt. Der Reaktionsumsatz beträgt 27 %. Das Produkt weist eine gute Lufttrocknung auf und eignet sich zur Herstellung von lufttrocknenden, hitzebeständigen Anstrichen.

Beispiel 5

Nach Beispiel 1 werden 1 000 g eines Alkoxypolysiloxans, das aus 11,3 Mol-% Phenyltrichlorsilan, 67,4 Mol-% Methyltrichlorsilan, 11,3 Mol-% Dimethyldichlorsilan und 10 Mol-% Trimethylchlorsilan hergestellt worden war und 3,4 Gew.-% Methoxy- sowie 2,9 Gew.-% Isopropoxygruppen enthält, mit 53 g Trimethylolpropan, 12 g Äthylenglykol und 0,18 g Butyltitanat in 1 000 g Xylol umgesetzt. Der Reaktionsumsatz, bezogen auf Methoxygruppen, beträgt 62 %, der Umsatz, bezogen auf Isopropoxygruppen, 12 %. Das Produkt ist lufttrocknend und eignet sich zur Herstellung hitzebeständiger Korrosionsschutzüberzüge.

**Ansprüche**

1. Verfahren zur Herstellung von hitzehärtbaren Siliconharzen durch Umsetzung von Alkoxypolysiloxanen der allgemeinen Formel

$$\begin{array}{l} R^2_a\text{-}Si(OR^1)_b \\ \quad | \\ \quad O_{\frac{4-(a+b)}{2}} \end{array}$$

($OR^1$ = Alkoxygruppe, abgeleitet von primären oder sekundären aliphatischen Alkoholen mit 1 bis 4 Kohlenstoffatomen, $R^2$ = Alkyl- und/oder Phenylgruppe, a = 1,0 bis 1,5, b = 0,1 bis 0,7) mit polyfunktionellen organischen Hydroxylverbindungen bei Temperaturen von 100-160 °C, gegebenenfalls in Gegenwart bekannter Lösungsmittel, im Molverhältnis COH : $SiOR^1$ von etwa eins, wobei die Reaktion bei einem Umsetzungsgrad von 25 bis 80 % durch Abkühlen auf eine Temperatur $< 100$ °C abgebrochen wird, dadurch gekennzeichnet, daß man

a) als polyfunktionelle organische Hydroxylverbindungen Äthylenglykol, Trimethyloläthan, Trimethylolpropan, Neopentylglykol, Glycerin, Pentaerythrit, Dimethylolcyclohexan oder ein Gemisch hiervon

b) mit dem Alkoxypolysiloxan umsetzt und den Wert des Index b so wählt, daß das ausgehärtete Endprodukt $\leqq$ 20 Gew.-% der polyfunktionellen organischen Hydroxylverbindung enthält.

2. Verfahren nach Anspruch 1, dadurch gekennzeichnet, daß a einen Wert von 1,2 bis 1,4 und b einen Wert von 0,3 bis 0,6 hat.

3. Verfahren nach Anspruch 1 oder 2, dadurch gekennzeichnet, daß $OR^1$ die Methoxygruppe bedeutet.

4. Verfahren nach Anspruch 1 oder 2, dadurch gekennzeichnet, daß $OR^1$ sowohl aus Methoxy- wie aus n- oder iso-Propoxy- bzw. n- oder iso-Butoxygruppen besteht, welche in einem molaren Verhältnis von 2,5 bis : 1 vorliegen.

5. Verfahren nach einem oder mehreren der vorhergehenden Ansprüche, dadurch gekennzeichnet, daß $R^2$ eine Methyl- und/oder Phenylgruppe ist.

6. Verfahren nach Anspruch 5, dadurch gekennzeichnet, daß $R^2$ sowohl aus Methyl- wie aus Phenylgruppen im molaren Verhältnis von 0,5 bis 1,5 : 1 besteht.

7. Verfahren nach den Ansprüchen 1, 2, 3, 5 und 6, dadurch gekennzeichnet, daß 10 bis 30 Mol-% Dimethylsiloxyeinheiten und 5 bis 10 Mol-% Trimethylsiloxyeinheiten enthält.

8. Verfahren nach Anspruch 7, dadurch gekennzeichnet, daß das Siloxan 50 bis 80 Mol-% Monophenylsiloxyeinheiten enthält.

9. Verfahren nach einem oder mehreren der vorhergehenden Ansprüche, dadurch gekennzeichnet, daß man das Verfahren mit Titanestern oder Kobaltsalzen organischer Säuren oder Sulfonsäuren, wie p-Toluolsulfonsäure oder Benzolsulfonsäure, als Umesterungskatalysator durchführt.

**Claims**

1. Process for the preparation of thermosetting silicone resins by reacting alkoxypolysiloxanes of the general formula

$$R^2_a\text{-}Si(OR^1)_b \quad \Big| \quad O_{\frac{4-(a+b)}{2}}$$

($OR^1$ = alkoxy group, derived form primary or secondary aliphatic alcohols with 1 to 4 carbon atoms, $R^2$ = alkyl and/or phenyl group, a = 1.0 to 1.5, b = 0.1 to 0.7) with polyfunctional organic hydroxy compounds at temperatures of 100 to 160 °C, if appropriate in the presence of known solvents, in a molar ratio of COH : $SiOR^1$ of about 1 : 1, the reaction being interrupted at a degree of conversion of 25 to 80 % by cooling to a temperature < 100 °C, characterised in that

a) ethylene glycol, trimethylolethane, trimethylolpropane, neopentyl glycol, glycerol, pentaerythritol, dimethylcyclohexane or a mixture thereof, as the polyfunctional organic hydroxy compounds,

b) are reacted with the alkoxypolysiloxane and the value of the index b is chosen such that the hardened end product contains ≦ 20 % by weight of the polyfunctional organic hydroxy compound.

2. Process according to Claim 1, characterised in that as has a value from 1.2 to 1.4 and b has a value from 0.3 to 0.6.

3. Process according to Claim 1 or 2, characterised in that $OR^1$ denotes the methoxy group.

4. Process according to Claim 1 or 2, characterised in that $OR^1$ consists both of methoxy groups and of n- or iso-propoxy or n- or iso-butoxy groups, in a molar ratio of 2.5 to 1 : 1.

5. Process according to one or more of the preceding claims, characterised in that $R^2$ is a methyl and/or phenyl group.

6. Process according to Claim 5, characterised in that $R^2$ consists both of methyl and of phenyl groups in a molar ratio of 0.5 to 1.5 : 1.

7. Process according to Claims 1, 2, 3, 5 and 6, characterised in that the siloxane contains 10 to 30 mol% of dimethylsiloxy units and 5 to 10 mol% of trimethylsiloxy units.

8. Process according to Claim 7, characterised in that the siloxane contains 50 to 80 mol% of monophenylsiloxy units.

9. Process according to one or more of the preceding claims, characterised in that the process is carried out with titanates of cobalt salts of organic acids or sulphonic acids, such as p-toluenesulphonic acid or benzenesulphonic acid, as the transesterification catalyst.

**Revendications**

1. Procédé de préparation de résines de silicone thermodurcissables par réaction d'alcoxypolysiloxanes de formule générale

$$R^2_a\text{-}Si(OR^1)_b \quad \Big| \quad O_{\frac{4-(a+b)}{2}}$$

($OR^1$ = groupe alcoxyle dérivé d'alcools aliphatiques primaires ou secondaires contenant 1 à 4 atomes de carbone, $R^2$ = groupe alkyle et/ou phényle, a = 1,0 à 1,5, b = 0,1 à 0,7) sur des composés hydroxylés organiques polyfonctionnels à des températures de 100 à 160 °C, éventuellement en présence de solvants connus, en un rapport molaire COH : $SiOR^1$ d'environ 1, la réaction étant interrompue, à un taux de conversion de 25 à 80 %, par refroidissement à une température inférieure à 100 °C, caractérisé par le fait :

a) que l'on utilise comme composés hydroxylés organiques polyfonctionnels l'éthylèneglycol, le triméthyloléthane, le triméthylolpropane, le néopentylèneglycol, le glycérol, le pentaérythritol, le diméthylolcyclohexane ou un mélange de ceux-ci,

b) qu'on les fait réagir sur l'alcoxypolysiloxane et que l'on choisit la valeur de l'indice b de façon telle que le produit final durci contiennent au maximum 20 % en poids du composé hydroxylé organique polyfonctionnel.

2. Procédé selon la revendication 1, caractérisé par le fait que a a une valeur de 1,2 à 1,4 et b une valeur de 0,3 à 0,6.

3. Procédé selon l'une des revendications 1 et 2, caractérisé par le fait que $OR^1$ représente le groupe méthoxyle.

4. Procédé selon l'une des revendications 1 et 2, caractérisé par le fait que $OR^1$ est formé aussi bien de groupes méthoxyle que de groupes n- ou isopropoxyle ou de groupes n- ou isobutoxyle qui sont présents en un rapport molaire compris entre 2,5 et 1 : 1.

5. Procédé selon une ou plusieurs des revendications précédentes, caractérisé par le fait que $R^2$ est un groupe méthyle et/ou phényle.

6. Procédé selon la revendication 5, caractérisé par le fait que $R^2$ est formé aussi bien de groupes méthyle que de groupes phényle, en un rapport molaire compris entre 0,5 et 1,5 : 1.

7. Procédé selon les revendications 1, 2, 3, 5 et 6, caractérisé par le fait que le siloxane contient 10 à 30 mol% d'unités diméthylsiloxyle et 5 à 10 mol% d'unités triméthylsiloxyle.

8. Procédé selon la revendication 7, caractérisé par le fait que le siloxane contient 50 à 80 mol% d'unités monophénylsiloxyle.

9. Procédé selon une ou plusieurs des revendications précédentes, caractérisé par le fait que l'on conduit le procédé avec des esters de titane ou des sels de cobalt d'acides organiques ou d'acides sulfoniques comme l'acide p-toluènesulfonique ou l'acide benzènesulfonique comme catalyseur de transestérification.